(19) Europäisches Patentamt / European Patent Office / Office européen des brevets

(11) **EP 4 075 665 B1**

(12) **EUROPEAN PATENT SPECIFICATION**

(45) Date of publication and mention
of the grant of the patent:
**10.09.2025 Bulletin 2025/37**

(21) Application number: **20898510.1**

(22) Date of filing: **01.07.2020**

(51) International Patent Classification (IPC):
**H02P 21/22** (2016.01)      **H02M 7/48** (2007.01)
**H02P 27/06** (2006.01)      **H02M 7/539** (2006.01)
**H02P 27/04** (2016.01)

(52) Cooperative Patent Classification (CPC):
**H02P 27/047; H02P 21/22; H02M 7/539;**
**H02P 2207/01**

(86) International application number:
**PCT/JP2020/025886**

(87) International publication number:
**WO 2021/117279 (17.06.2021 Gazette 2021/24)**

(54) **POWER CONVERTER**

STROMWANDLER

CONVERTISSEUR DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2019 JP 2019225619**

(43) Date of publication of application:
**19.10.2022 Bulletin 2022/42**

(73) Proprietor: **HITACHI INDUSTRIAL EQUIPMENT
SYSTEMS CO., LTD.
Tokyo 101-0022 (JP)**

(72) Inventors:
• **TOBARI, Kazuaki**
  **Tokyo 100-8280 (JP)**
• **SUGIMOTO, Takuya**
  **Tokyo 101-0022 (JP)**
• **ONUMA, Yusaku**
  **Tokyo 101-0022 (JP)**
• **AOYAGI, Shigehisa**
  **Tokyo 100-8280 (JP)**

(74) Representative: **MERH-IP Matias Erny Reichl
Hoffmann
Patentanwälte PartG mbB
Paul-Heyse-Straße 29
80336 München (DE)**

(56) References cited:
**EP-A1- 3 509 211      JP-A- 2010 220 331
JP-A- 2010 220 331      JP-A- 2018 182 989
JP-A- 2019 041 562      JP-A- 2019 041 562
JP-A- H11 197 897      US-A1- 2007 018 606**

EP 4 075 665 B1

# EP 4 075 665 B1

**Description**

TECHNICAL FIELD

The present invention relates to a power conversion device that is involved in drive control of the power conversion device driving an induction motor, reduces an output current, and operates with high efficiency.

BACKGROUND ART

As a high-efficiency control method for an induction motor, as described in JP 2010-220331 A (Patent Document 1), there is a technology of changing first and second magnetic flux commands depending on whether an excitation current command is equal to or less than a saturation current limit threshold value or exceeds the saturation current limit threshold value.

CITATION LIST

PATENT DOCUMENT

Patent Document 1: JP 2010-220331 A
Patent Document 2: US 2007/018606 A1
Patent Document 3: EP 3 509 211 A1

SUMMARY OF THE INVENTION

PROBLEMS TO BE SOLVED BY THE INVENTION

In the method described in Patent Document 1, a magnetic flux saturation point is provided, and slopes of the first and second magnetic flux commands are approximated by two points depending on whether the excitation current command is equal to or less than a saturation current limit threshold value or exceeds the saturation current limit threshold value. For this reason, an output current may not be minimized in an induction motor of another model.
Patent Document 2 discloses a control method and a controller for an a.c. motor without using a speed sensor in which the speed estimated value or the magnetic flux estimated value of an all-dimensional magnetic flux speed observer can be made to correspond to that of an actual a.c. motor.
Patent Document 3 discloses an inverter control apparatus and a motor drive system which controls an electric current and includes an inverter main circuit, an electric-current detector, a command generator and an electric-current controller.
An object of the invention is to provide a power conversion device capable of reducing an output current even in a general-purpose inverter and realizing a highly efficient output current property.

SOLUTIONS TO PROBLEMS

The above cited problem is solved in accordance with the appended set of claims. An example of a "power conversion device" of the invention for solving the above problems is a power conversion device for driving and controlling an induction motor, including a voltage command correction computation unit for computing a voltage command correction value for correcting a torque axis voltage command based on a torque axis current detection value and a magnetic flux axis current detection value, in which the voltage command correction computation unit computes the voltage command correction value based on a deviation between the magnetic flux axis current detection value and a corrected torque current obtained by multiplying an absolute value of a torque axis current detection value by a magnetic flux saturation coefficient changing according to an excitation current.

EFFECTS OF THE INVENTION

According to the invention, it is possible to provide a power conversion device capable of reducing an output current and realizing a highly efficient output current property.
Issues, configurations, and effects other than those described above will be clarified by the description of the following embodiments.

2

BRIEF DESCRIPTION OF THE DRAWINGS

Fig. 1 is a configuration diagram of a power conversion device according to a first embodiment.
Fig. 2 is a configuration diagram of a voltage command correction computation unit according to the first embodiment.
Fig. 3 is a current vector diagram according to the first embodiment.
Fig. 4 is a relationship diagram of a d-axis current detection value and a magnetic flux saturation coefficient according to the first embodiment.
Fig. 5 is a diagram illustrating an actual measurement result of an output current using the invention.
Fig. 6 is a configuration diagram of a modification of a voltage command correction computation unit according to the first embodiment.
Fig. 7 is a configuration diagram for confirming a manifestation according to the first embodiment.
Fig. 8 is a configuration diagram of a power conversion device according to a second embodiment.
Fig. 9 is a configuration diagram of a voltage command correction computation unit according to the second embodiment.
Fig. 10 is a configuration diagram of a power conversion device according to a third embodiment.
Fig. 11 is a configuration diagram of an excitation current command correction computation unit according to the third embodiment.
Fig. 12 is a configuration diagram of a power conversion device according to a fourth embodiment.

MODE FOR CARRYING OUT THE INVENTION

Hereinafter, embodiments of the invention will be described in detail with reference to the drawings. Note that a common configuration in each figure for describing the embodiment is given the same name and reference symbol, and a repeated description thereof will be omitted. Moreover, each embodiment described below is not limited to the illustrated example.

First embodiment

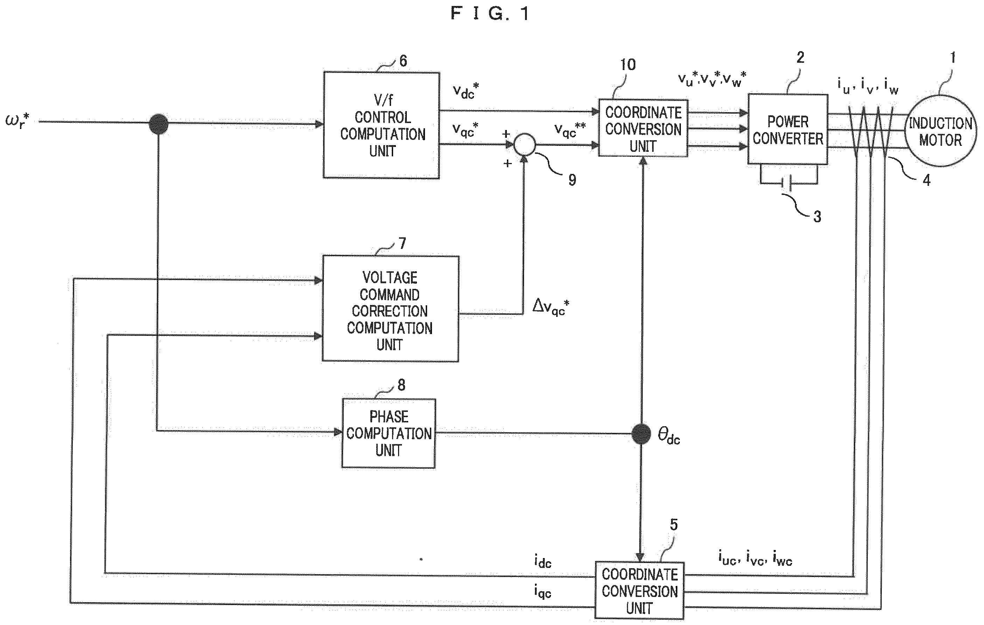

Fig. 1 is a configuration diagram of a power conversion device according to a first embodiment. The present embodiment is applied to a power conversion device of V/f control.

An induction motor 1 generates magnetic flux by a current (excitation current) of a magnetic flux axis (d-axis) component, and generates torque by a current (torque current) of a torque axis (q-axis) component orthogonal to the magnetic flux axis.

The power converter 2 includes, for example, an inverter, outputs a voltage value proportional to three-phase AC voltage commands $V_u{}^*$, $V_v{}^*$, and $V_w{}^*$, and changes an output voltage value and an output frequency value of the induction motor 1.

A DC power supply 3 supplies a DC voltage $E_{DC}$ to the power converter 2.

A current detector 4 outputs $i_{uc}$, $i_{vc}$, and $i_{wc}$, which are detection values of three-phase alternating currents $i_u$, $i_v$, and $i_w$ of the induction motor 1. The current detector 4 may detect line currents of two of the three phases of the induction motor 1, for example, the u-phase and the w-phase, and the v-phase line current may be obtained as $i_v = -(i_u + i_w)$ from an AC condition ($i_u + i_v + i_w = 0$).

A coordinate conversion unit 5 outputs a d-axis current detection value (excitation current detection value) $i_{dc}$ and a q-axis current detection value (torque current detection value) $i_{qc}$ from a phase computation value $\theta_{dc}$ and the detection values $i_{uc}$, $i_{vc}$, and $i_{wc}$ of the three-phase alternating currents $i_u$, $i_v$, and $i_w$.

A V/f control computation unit 6 outputs a d-axis voltage command $V_{dc}{}^*$ which is "0" (zero) and a q-axis voltage command $V_{qc}{}^*$ proportional to a frequency command $\omega_r{}^*$ based on the frequency command $\omega_r{}^*$.

A voltage command correction computation unit 7 outputs a q-axis voltage command correction value $\Delta V_{qc}{}^*$ computed based on a q-axis current detection value $i_{qc}$ and a d-axis current detection value $i_{dc}$.

A phase computation unit 8 integrates the frequency command $\omega_r{}^*$ and outputs the phase computation value $\theta_{dc}$.

An addition unit 9 adds the q-axis voltage command $V_{qc}{}^*$ and the q-axis voltage command correction value $\Delta V_{qc}{}^*$, and outputs a q-axis correction voltage command $V_{qc}{}^{**}$.

A coordinate conversion unit 10 outputs the three-phase AC voltage commands $V_u{}^*$, $V_v{}^*$, and $V_w{}^*$ from the d-axis voltage command $V_{dc}{}^*$, the q-axis correction voltage command $V_{qc}{}^{**}$, and the phase computation value $\theta_{dc}$.

First, a description will be given of a basic operation of a V/f control method when the voltage command correction computation unit 7, which is a feature of the present embodiment, is used.

The V/f control computation unit 6 outputs the d-axis voltage command $V_{dc}{}^*$, which is "0", and the q-axis voltage command $V_{qc}{}^*$ using the frequency command $\omega_r{}^*$ and the DC voltage $E_{DC}$ according to (Equation 1).
[Equation 1]

$$\begin{bmatrix} V_{dc}{}^* = 0 \\ V_{qc}{}^* = \frac{2}{\sqrt{3}} \cdot \frac{E_{DC}/2}{\omega_{r\_max}} \cdot \omega_r{}^* \end{bmatrix} \qquad \cdots (1)$$

Here, $\omega_{r\_max}$ is a base angular frequency.

The phase computation unit 8 computes a phase $\theta_{dc}$ of the magnetic flux axis of the induction motor 1 from the frequency command $\omega_r{}^*$ according to (Equation 2).
[Equation 2]

$$\theta_{dc} = \frac{1}{s} \cdot \omega_r{}^* \qquad \cdots (2)$$

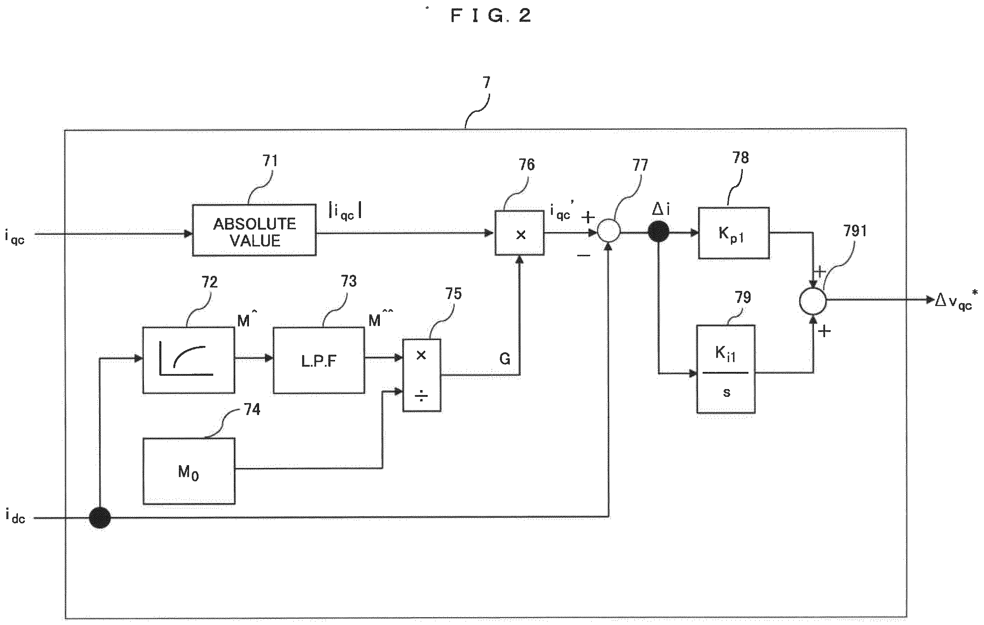

Fig. 2 illustrates a block configuration of the voltage command correction computation unit 7 which is a feature of the present embodiment.

In an absolute value computation unit 71, the q-axis current detection value (torque current detection value) $i_{qc}$ is input, and the absolute value $|i_{qc}|$ of $i_{qc}$ is output.

A relationship between the excitation current and a mutual inductance value $M^\wedge$ of the induction motor is stored in a table 72, the d-axis current detection value (excitation current detection value) $i_{dc}$ is input thereto, and a corresponding mutual inductance value $M^\wedge$ is output therefrom. The mutual inductance value $M^\wedge$ is input to a low-pass filter 73, and $M^{\wedge\wedge}$, which is a primary delay signal thereof, is output therefrom. A setting unit 74 outputs a mutual inductance value $M_0$ of the induction motor, which is a reference value when measured at a base frequency. The mutual inductance value $M^{\wedge\wedge}$ and the reference mutual inductance value $M_0$ are input to a division unit 75, and a magnetic flux saturation coefficient $G$ is output therefrom by computation shown in (Equation 3).
[Equation 3]

$$G = \frac{M^{\wedge\wedge}}{M_0} \qquad \cdots (3)$$

Note that the table 72 is prepared in advance by changing the exciting current and measuring the mutual inductance of the induction motor. Further, the table 72 of Fig. 2 illustrates the relationship between the excitation current and the mutual inductance $M^\wedge$, and may be a table illustrating the relationship between the excitation current and the magnetic flux saturation coefficient $G$ by computing the magnetic flux saturation coefficient $G$ from the mutual inductance using (Equation 3). Further, instead of referring to the table, the magnetic flux saturation coefficient $G$ may be computed by an approximate mathematical expression according to the excitation current.

The absolute value $|i_{qc}|$ of the q-axis current detection value $i_{qc}$ and the magnetic flux saturation coefficient $G$ are input to a multiplication unit 76, and a q-axis corrected current (corrected torque current) $i_{qc}'$ shown in (Equation 4) is output therefrom.
[Equation 4]

$$i_{qc}' = \left| i_{qc} \right| \cdot G \qquad \cdots (4)$$

The q-axis corrected current $i_{qc}'$ and the d-axis current detection value $i_{dc}$ are input to the subtraction unit 77, and a current deviation $\Delta i$ is output therefrom. The current deviation $\Delta i$ is input to a proportional computation unit 78 having a constant of the proportional gain $K_{p1}$ and an integral computation unit 79 having a constant of the integral gain $K_{i1}$, and output signals thereof are output to an addition unit 791. As a result, the voltage command correction value $\Delta V_{qc}{}^*$ of the q-axis voltage command $V_{qc}*$ is computed by computation shown in (Equation 5).
[Equation 5]

$$\Delta v_{qc}{}^{*} = (K_{p1} + \frac{K_{i1}}{s}) \cdot \Delta i \qquad \cdots (5)$$

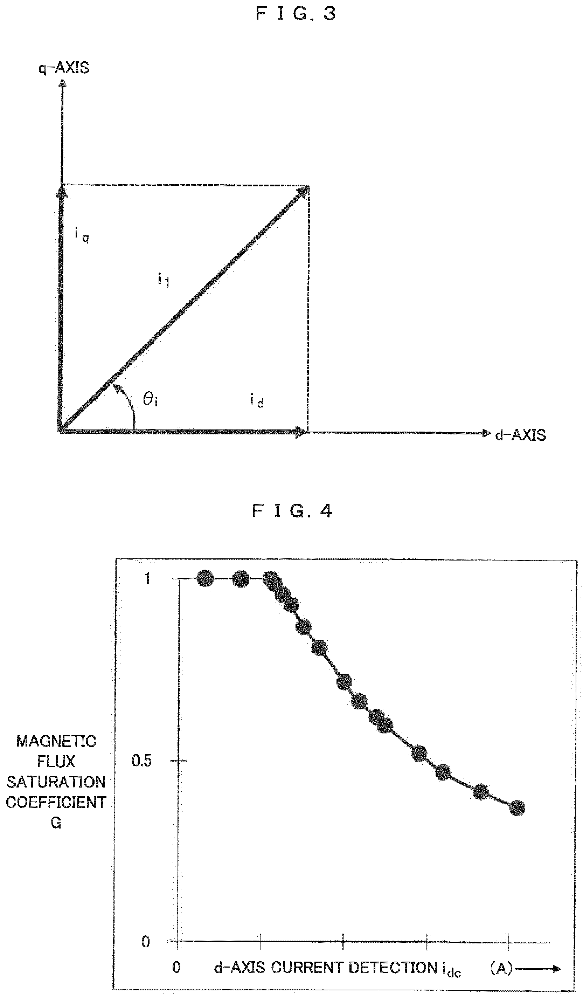

A principle that the invention becomes highly efficient will be described. Fig. 3 illustrates a current vector diagram of the induction motor. When a direction of the magnetic flux generated by an excitation current $i_d$ is set to the d-axis, a direction $\pi/2$ ahead of the direction is set to the q-axis which is a torque axis, and a phase angle between an output current $i_1$ and the excitation current $i_d$ is set to $\theta_i$, the excitation current $i_q$ and a torque current $i_q$ are given by Equation (6).
[Equation 6]

$$\left. \begin{array}{l} i_d = i_1 \cos\theta_i \\ i_q = i_1 \sin\theta_i \end{array} \right\} \qquad \cdots (6)$$

When the phase angle $\theta_1 = \pi/4$ in (Equation 6), the output current $i_1$ becomes the minimum in a relationship of (Equation 7) at the same torque.
[Equation 7]

$$i_d = i_q = \frac{1}{\sqrt{2}} i_1 \qquad \cdots (7)$$

The torque of the induction motor is given by (Equation 8).
[Equation 8]

$$\tau = \frac{3}{2} P_m \frac{M}{L_2} \left( \phi_{2d} i_q - \phi_{2q} i_d \right) \qquad \cdots (8)$$

Here, M is the mutual inductance, $L_2$ is the secondary inductance, $\phi_{2d}$ is the d-axis magnetic flux, and $\phi_{2q}$ is the q-axis magnetic flux.
Here, an ideal condition of the magnetic flux in the motor control is (Equation 9).
[Equation 9]

$$\left. \begin{array}{l} \phi_{2d} = M i_d \\ \phi_{2q} = 0 \end{array} \right\} \qquad \cdots (9)$$

When (Equation 9) is substituted into (Equation 8), (Equation 10) is obtained.
[Equation 10]

$$\tau = \frac{3}{2} P_m \frac{M}{L_2} \phi_{2d} i_q = \frac{3}{2} P_m \frac{M^2}{L_2} i_d i_q \qquad \cdots (10)$$

Further, when (Equation 7) is substituted into (Equation 10), (Equation 11) which is a torque equation having a minimum output current is obtained.
[Equation 11]

$$\tau = \frac{3}{4} P_m \frac{M^2}{L_2} i_1^2 \qquad \cdots (11)$$

However, in practice, the mutual inductance M has a saturation characteristic that changes according to the current value. The d-axis magnetic flux $\phi_{2d}$ may not increase due to a saturation phenomenon, and a minimum point deviation of the output current $i_1$ is conceivable in a state where the d-axis current (excitation current) $i_d$ excessively flows. Therefore, the invention introduces the magnetic flux saturation coefficient G as described above, and devises so that the d-axis current (excitation current) $i_d$ does not flow more than necessary.

In the invention, to support both power running/regenerative operation, the q-axis voltage command $V_{qc}^*$ is corrected so that a q-axis corrected current $i_{qc'}$ obtained by multiplying the absolute value $|i_{qc}|$ of the q-axis current detection value $i_{qc}$ by the magnetic flux saturation coefficient G and the d-axis current detection value $i_{dc}$ follow.

Characteristics of the d-axis current detection value $i_{dc}$ and the magnetic flux saturation coefficient G according to the present embodiment are illustrated in Fig. 4. This figure shows a computation result of Equation (3), and is an example of measurement at 16 points in the present embodiment. As illustrated in the figure, the magnetic flux saturation coefficient G is a constant value in a range where the d-axis current detection value $i_{dc}$ is small, and gradually decreases according to the d-axis current detection value $i_{dc}$ when a certain value is exceeded. It can be seen that the characteristics cannot be approximated by two points.

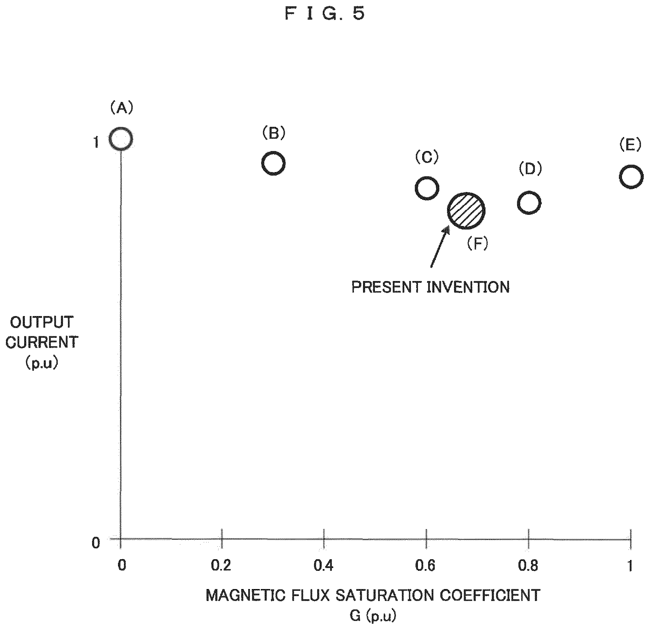

Fig. 5 illustrates actual measurement results using the invention. A horizontal axis illustrates the magnetic flux saturation coefficient G, and a vertical axis illustrates the magnitude of the output current of the induction motor. In a case where (Equation 3) is not computed when (A) G = 0.0 does not apply the invention, and (Equation 4) is computed with (B) G = 0.3, (C) G = 0.6, (D) G = 0.8, and (E) G = 1.0, results of measuring output currents are illustrated. The output current when G = 0.0 is standardized as 1.0. G = 1.0 is a case where magnetic flux saturation is not taken into consideration, and it can be seen that the output current at G = 1.0 is larger than the output currents at (C) G = 0.6 and (D) G = 0.8. (F) is a case where (Equation 3) of the invention is computed. In (F), the output current is minimized, and the effect of the invention is clear.

According to the present embodiment, by correcting the q-axis voltage command $V_{qc}^*$ so that the q-axis corrected current $i_{qc}'$ obtained by multiplying the absolute value $|i_{qc}|$ of the q-axis current detection value $i_{qc}$ by the magnetic flux saturation coefficient G that changes according to the excitation current and the d-axis current detection value $i_{dc}$ follow, it is possible to realize the highly efficient current property with less current value when compared to V/f control at (A) G = 0.0.

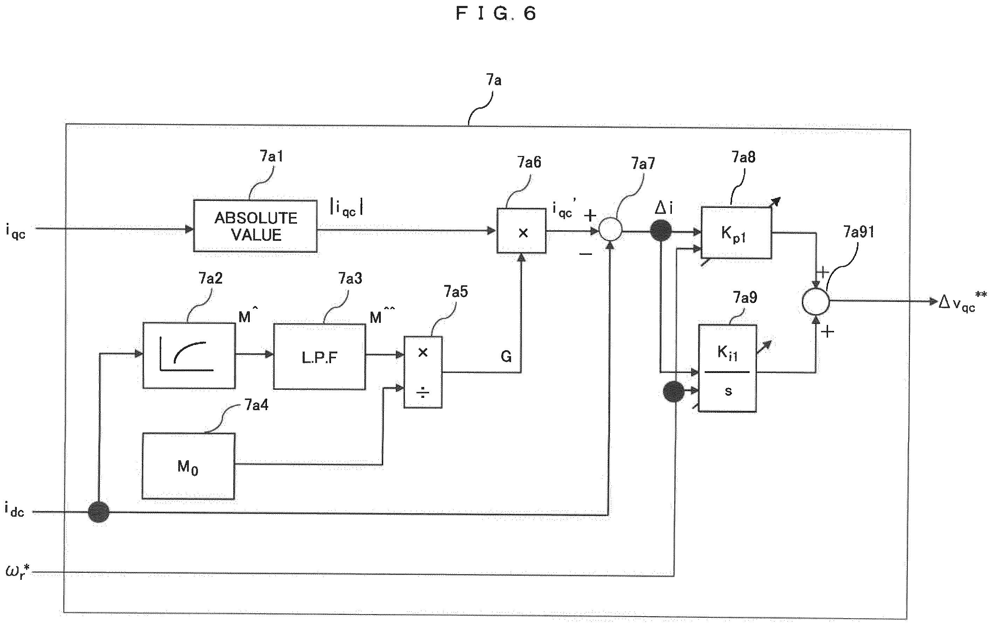

Further, in the above embodiment, in the voltage command correction computation unit 7, the gains ($K_{p1}$, $K_{i1}$) of the proportional computation and the integral computation are fixed values. However, as in a modification of Fig. 6, the gains may be changed according to frequency command $\omega_r^*$.

The voltage command correction computation unit 7a of Fig. 6 corresponds to the voltage command correction computation unit 7 of Fig. 2. In addition, reference symbols 7a1, 7a2, 7a3, 7a4, 7a5, 7a6, 7a7, and 7a91 in Fig. 6 are the same as reference symbols 71, 72, 73, 74, 75, 76, 77, and 791 in Fig. 2.

In Fig. 6, $\Delta i$ which is a deviation between the q-axis corrected current $i_{qc}'$ and the d-axis current detection value $i_{dc}$ is input to the proportional computation unit 7a8 having the proportional gain $K_{p1}$ that changes according to the magnitude of the frequency command $\omega_r^*$ and the integral computation unit 7a9 having the integral gain $K_{i1}$, and output values thereof are added by the addition unit 7a91 and output as a voltage command correction value $\Delta V_{qc}^{**}$ of the q-axis voltage command $V_{qc}^*$. In the same figure, by changing $K_{p1}$ and $K_{i1}$ substantially in proportional to the magnitude of the frequency command $\omega_r^*$, an action of the d-axis current detection value $i_{dc}$ following the q-axis corrected current $i_{qc}'$ changes according to a frequency. That is, the output current can be minimized in a shorter time by increasing response of stability of the feedback loop related to the high efficiency control in a low speed range to a high speed range.

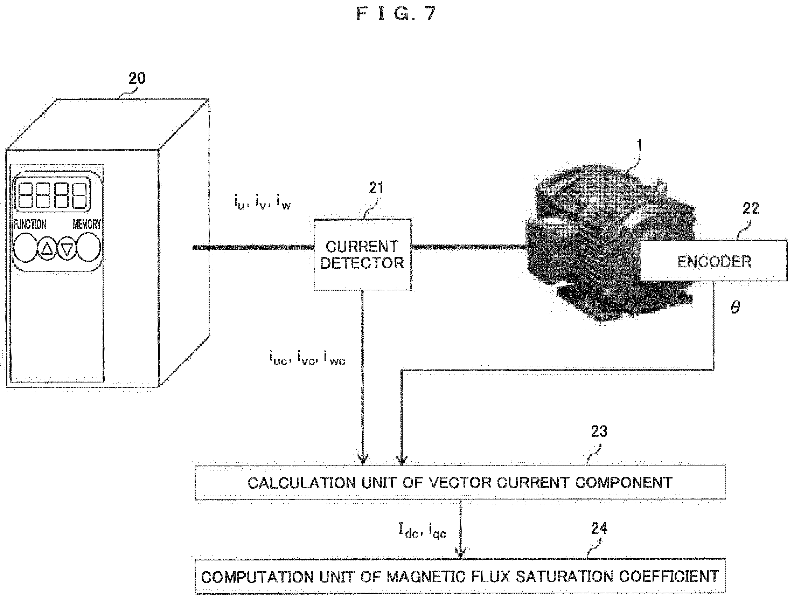

Here, a verification method when the present embodiment is adopted will be described with reference to Fig. 7. A current detector 21 is attached to a power conversion device 20 that drives the induction motor 1, and an encoder 22 is attached to a shaft of the induction motor 1.

Three-phase AC current detection values ($i_{uc}$, $i_{vc}$, $i_{wc}$) which are the outputs of the current detector 21 and a position $\theta$ which is an output of the encoder are input to a calculation unit 23 of a vector current component, and the calculation unit 23 calculates vector current components $i_{dc}$ and $i_{qc}$ according to (Equation 12).

[Equation 12]

$$\begin{bmatrix} i_{dc} \\ i_{qc} \end{bmatrix} = \sqrt{\frac{2}{3}} \begin{bmatrix} \cos\theta_d & \sin\theta_d \\ -\sin\theta_d & \cos\theta_d \end{bmatrix} \begin{bmatrix} 1 & -1/2 & -1/2 \\ 0 & \sqrt{3}/2 & -\sqrt{3}/2 \end{bmatrix} \begin{bmatrix} i_{uc} \\ i_{vc} \\ i_{wc} \end{bmatrix}$$

$$\cdots(12)$$

[Equation 13]

$$G^{\wedge} = \frac{i_{dc}}{\left| i_{qc} \right|} \qquad \cdots(13)$$

A computation unit 24 of the magnetic flux saturation coefficient computes an estimated value $G^{\wedge}$ of the magnetic flux saturation coefficient G according to (Equation 13). When the estimated value $G^{\wedge}$ is the same as the magnetic flux saturation coefficient G measured by the inverter using the invention, it is clear that the invention is adopted.

Second embodiment

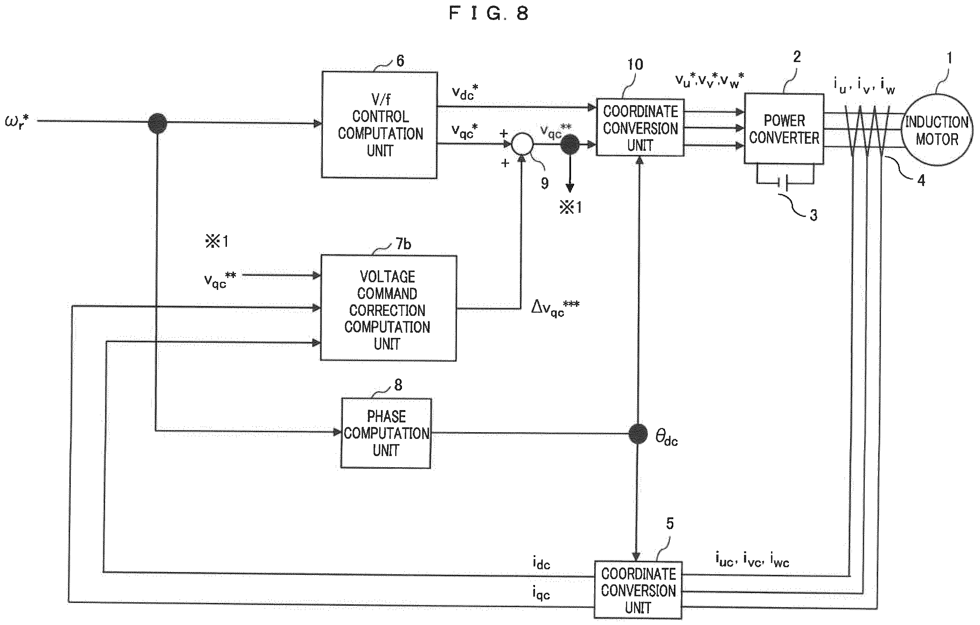

Fig. 8 is a configuration diagram of a power conversion device according to a second embodiment. The present embodiment is applied to the power conversion device of the V/f control. The first embodiment is a method in which the q-axis corrected current (corrected torque current) $i_{qc}'$ is computed and the excitation current $i_d$ is followed. However, the present embodiment is a method in which the absolute value $|P_c|$ of active power is followed by the absolute value $|Q_c|$ of reactive power.

In the figure, reference symbols 1 to 6 and 8 to 10 are the same as those of Fig. 1.

A voltage command correction computation unit 7b outputs a voltage command correction value $\Delta V_{qc}{}^{***}$ for correcting the q-axis voltage command $V_{qc}{}^*$ based on corrected active power $P_c'$ obtained by multiplying the absolute value $|P_c|$ of the active power computation value by the magnetic flux saturation coefficient G and the absolute value $|Q_c|$ of the reactive power computation value.

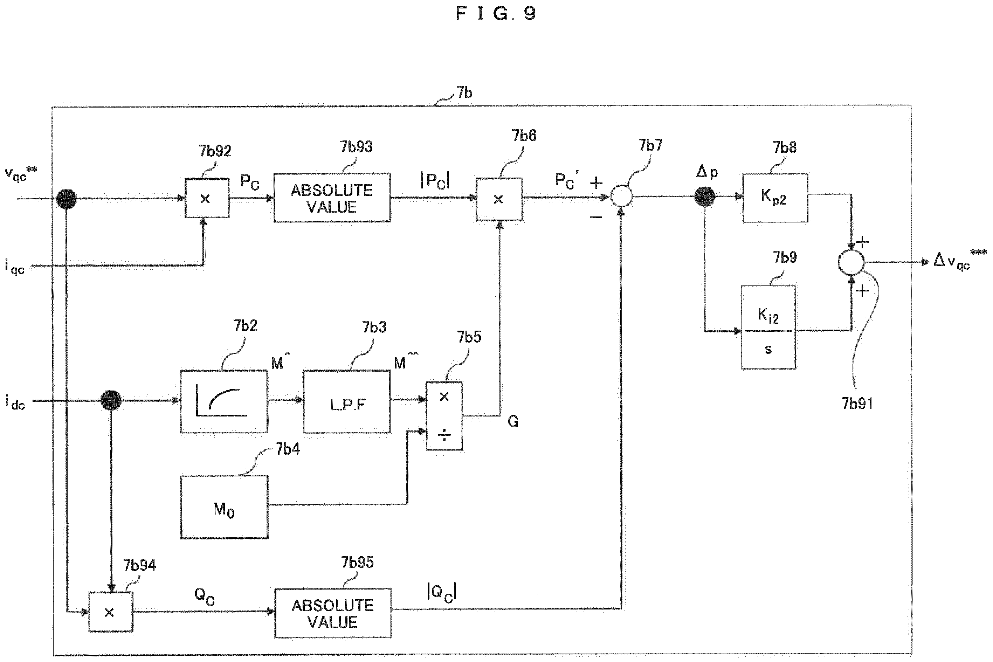

Fig. 9 illustrates a configuration of the voltage command correction computation unit 7b. Reference symbols 7b2, 7b3, 7b4, 7b5, 7b6, 7b7, 7b8, 7b9, and 7b91 are the same as reference symbols 72, 73, 74, 75, 76, 77, 78, 79, and 791 of Fig. 2.

The q-axis voltage command $V_{qc}{}^{**}$ and the q-axis current detection value $i_{qc}$ are input to a multiplication unit 7b92, and the multiplication unit 7b92 outputs an active power computation value $P_c$ which is a multiplication value thereof. The active power computation value $P_c$ which is an output of the multiplication unit 7b92 is input to an absolute value computation unit 7b93, and the absolute value computation unit 7b93 outputs the absolute value $|P_c|$ of $P_c$.

The absolute value $|P_c|$ of the active power computation value $P_c$ and the magnetic flux saturation coefficient G are input to the multiplication unit 7b6, and the corrected active power $P_c'$ is output therefrom.

The q-axis voltage command $V_{qc}{}^{**}$ and the d-axis current detection value $i_{dc}$ are input to a multiplication unit 7b94, and the multiplication unit 7b94 outputs the reactive power computation value $Q_c$ which is a multiplication value thereof. The reactive power computation value $Q_c$ is input to an absolute value computation unit 7b95, and the absolute value computation unit 7b95 outputs the absolute value $|Q_c|$.

The corrected active power $P_c'$ and the absolute value $|Q_c|$ of the reactive power computation value $Q_c$ are input to the subtraction unit 7b7, and a power deviation $\Delta p$ is output therefrom.

The power deviation $\Delta p$ is input to the proportional computation unit 7b8 having a constant of the proportional gain $K_{p2}$ and the integral computation unit 7b9 having a constant of the integral gain $K_{i2}$, and output signals thereof are output to the addition unit 7b91. By computation shown in a result (Equation 14) thereof, the voltage command correction value $\Delta V_{qc}{}^{***}$ of the q-axis voltage command $V_{qc}{}^{**}$ is computed.

[Equation 14]

$$\Delta v_{qc}{}^{***} = \left( K_{p2} + \frac{K_{i2}}{s} \right) \cdot \Delta p \qquad \cdots(14)$$

Here, a principle that the present embodiment is highly efficient will be described. When the d-axis voltage command $V_{dc}{}^* = 0$, the active power $P_c$ computed on a control axis is given by (Equation 15).
[Equation 15]

$$P_c = v_{qc} i_{qc} = (R_1 i_{qc} + \omega_1 L_\sigma i_{dc} + \omega_1 \frac{M}{L_2} \phi_{2d}) i_{qc}$$

$$= R_1 i_{qc}{}^2 + \omega_1 L_\sigma i_{dc} i_{qc} + \omega_1 \frac{M}{L_2} \phi_{2d} i_{qc} \qquad \cdots (15)$$

The absolute value of the active power $P_c$ is (Equation 16).
[Equation 16]

$$|P_c| = \left| R_1 i_{qc}{}^2 + \omega_1 L_\sigma i_{dc} i_{qc} + \omega_1 \frac{M}{L_2} \phi_{2d} i_{qc} \right| \qquad \cdots (16)$$

When the absolute value of the active power $P_c$ is multiplied by the magnetic flux saturation coefficient G, (Equation 17) is given.
[Equation 17]

$$P_c{}' = G \left| R_1 i_{qc}{}^2 + \omega_1 L_\sigma i_{dc} i_{qc} + \omega_1 \frac{M}{L_2} \phi_{2d} i_{qc} \right| \qquad \cdots (17)$$

Further, the reactive power $Q_c$ computed on the control axis is given by (Equation 18).
[Equation 18]

$$Q_c = - v_{qc} i_{dc} = -(R_1 i_{qc} + \omega_1 L_\sigma i_{dc} + \omega_1 \frac{M}{L_2} \phi_{2d}) i_{dc}$$

$$= - R_1 i_{qc} i_{dc} - \omega_1 L_\sigma i_{dc}{}^2 - \omega_1 \frac{M}{L_2} \phi_{2d} i_{dc} \qquad \cdots (18)$$

The absolute value of the reactive power $Q_c$ is (Equation 19).
[Equation 19]

$$|Q_c| = \left| - R_1 i_{qc} i_{dc} - \omega_1 L_\sigma i_{dc}{}^2 - \omega_1 \frac{M}{L_2} \phi_{2d} i_{dc} \right| \qquad \cdots (19)$$

A q-axis voltage command value $V_{qc}{}^*$ is corrected using $P_c{}'$ and $|Q_c|$. When a control operation is performed so that (Equation 17) = (Equation 19), (Equation 20) is given.
[Equation 20]

$$G\left|R_1 i_{qc}^2 + \omega_1 L_\sigma i_{dc} i_{qc} + \omega_1 \frac{M}{L_2}\phi_{2d} i_{qc}\right| = \left|-R_1 i_{qc} i_{dc} - \omega_1 L_\sigma i_{dc}^2 - \omega_1 \frac{M}{L_2}\phi_{2d} i_{dc}\right|$$

$$\cdots (20)$$

As a result, highly efficient operation similar to that of the first embodiment can be implemented.

According to the present embodiment, by correcting the q-axis voltage command $V_{qc}^*$ so that the corrected active power $P_c'$ obtained by multiplying the absolute value $|P_c|$ of the active power $P_c$ by the magnetic flux saturation coefficient G that changes according to the excitation current and the absolute value $|Q_c|$ of the reactive power follow, it is possible to realize a highly efficient current property with a smaller current value.

Third embodiment

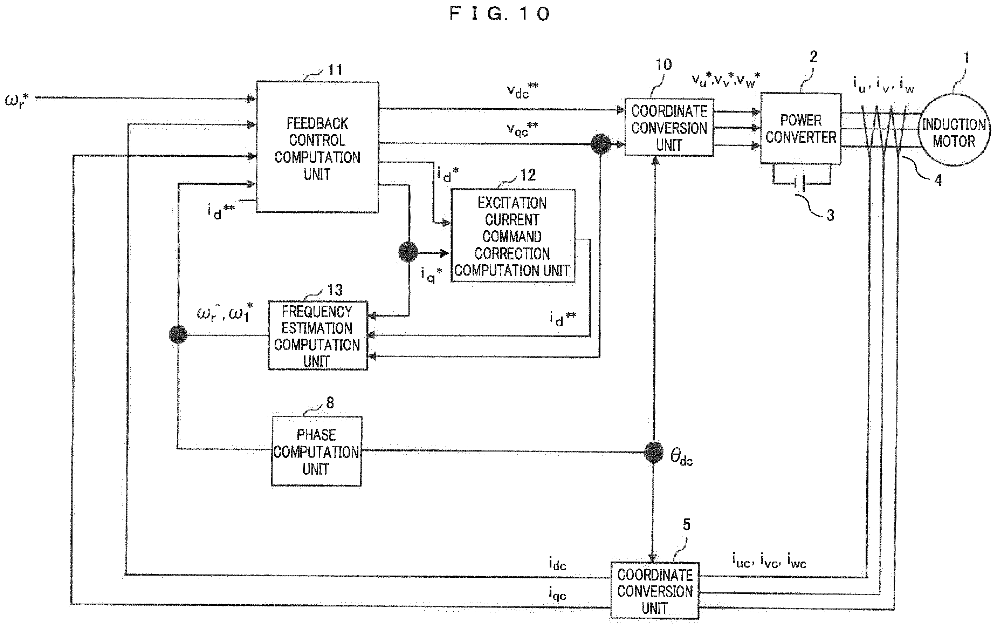

Fig. 10 is a configuration diagram of a power conversion device according to a third embodiment. The present embodiment is applied to the power conversion device of vector control. The first and second embodiments are a method in which the induction motor 1 is V/f-controlled. However, the present embodiment is a method of performing computation of speed control, current control, and vector control.

In the figure, reference symbols 1 to 5, 8 and 10 are the same as those of Fig. 1.

A corrected excitation current command $i_d^{**}$, d-axis and q-axis current detection values $i_{dc}$ and $i_{qc}$, a frequency command $\omega_r^*$, an estimated frequency $\omega_r^{\wedge}$, and an output frequency $\omega_1^*$ are input to a feedback control computation unit 11. In the feedback control computation unit 11, feedback control of speed control, current control, and vector control is computed.

$i_d^{**}$ which is the corrected excitation current command is a variable value, and a variable d-axis magnetic flux $\phi_{2d}$ is generated in the induction motor 1.

In the speed control, the q-axis current command $i_q^*$, which is a torque current command, is computed according to (Equation 21) by proportional control and integral control so that the estimated frequency $\omega_r^{\wedge}$ follows the frequency command $\omega_r^*$.

[Equation 21]

$$i_q^* = \left(\omega_r^* - \omega_r^{\wedge}\right)\left(K_{sp} + \frac{K_{si}}{s}\right) \quad \cdots (21)$$

Here, $K_{sp}$: proportional gain of speed control, $K_{si}$: integral gain of speed control.

In the vector control, the voltage commands $V_{dc}^*$ and $V_{qc}^*$ are computed according to (Equation 22) using the d-axis and q-axis current commands $i_d^{**}$ and $i_q^*$, electric circuit constants ($R_1$, $L_\sigma$, M, $L_2$) of the induction motor 1, the d-axis magnetic flux command $\phi_{2d}^*$, and the output frequency $\omega_1^*$.

[Equation 22]

$$\left[\begin{array}{l} V_{dc}^* = R_1^* i_d^{**} - \omega_1^* L_\sigma^* \frac{1}{1+T_{acr}s} i_q^* \\ V_{qc}^* = R_1^* i_q^* + \omega_1^*\left(L_\sigma^* \frac{1}{1+T_{acr}s} i_d^{**} + \frac{M^*}{L_2^*}\phi_{2d}^*\right) \end{array}\right] \quad \cdots (22)$$

Here, $T_{acr}$: time constant corresponding to current control delay, $R_1$: primary resistance value, $L_\sigma$: leakage inductance value, M: mutual inductance value, $L_2$: secondary side inductance value.

In the current control, the d-axis and q-axis voltage correction values $\Delta V_{dc}$ and $\Delta V_{qc}$ are computed according to (Equation 23) by proportional control and integral control so that the current detection values $i_{dc}$ and $i_{qc}$ of each component follow the d-axis and q-axis current commands $i_d^{**}$ and $i_q^*$.

[Equation 23]

$$\left[\begin{array}{l} \Delta v_{dc} = \left( K_{pd} + \dfrac{K_{id}}{s} \right) \left( i_d{}^{**} - i_{dc} \right) \\[4mm] \Delta v_{qc} = \left( K_{pq} + \dfrac{K_{iq}}{s} \right) \left( i_q{}^{*} - i_{qc} \right) \end{array}\right] \qquad \cdots (23)$$

Here, $K_{pd}$: proportional gain of d-axis current control, $K_{id}$: integral gain of d-axis current control, $K_{pq}$: proportional gain of q-axis current control, $K_{iq}$: integral gain of q-axis current control.

Further, according to (Equation 24), the d-axis and q-axis voltage commands $V_{dc}{}^{**}$ and $V_{qc}{}^{**}$ are computed.

[Equation 24]

$$\left[\begin{array}{l} v_{dc}{}^{**} = v_{dc}{}^{*} + \Delta v_{dc} \\[3mm] v_{qc}{}^{**} = v_{qc}{}^{*} + \Delta v_{qc} \end{array}\right] \qquad \cdots (24)$$

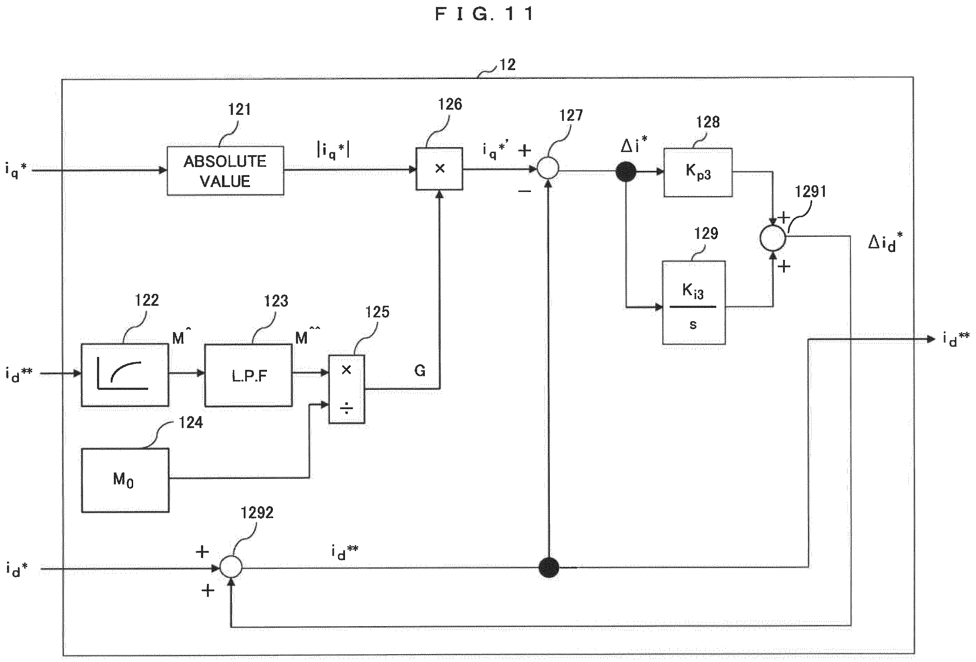

Fig. 11 illustrates a block configuration of an excitation current command correction computation unit 12 which is a feature of the present embodiment.

The excitation current command correction computation unit 12 outputs a d-axis corrected voltage command $i_d{}^{**}$ based on a q-axis corrected current command $i_q{}^{*\prime}$ obtained by multiplying the absolute value $|i_q{}^{*}|$ of the q-axis current command $i_q{}^{*}$ by the magnetic flux saturation coefficient G and the d-axis current command $i_d{}^{*}$.

In the figure, reference symbols 121, 122, 123, 124, 125, 126, 127, 128, 129, and 1291 are the same as reference symbols 71, 72, 73, 74, 75, 76, 77, 78, 79, and 791 of Fig. 2.

The q-axis current command $i_q{}^{*}$ is input to the absolute value computation unit 121, and the absolute value $|i_q{}^{*}|$ of $i_q{}^{*}$ is output therefrom. A relationship between the excitation current and the mutual inductance value $M^{\wedge}$ of the induction motor is stored in a table 122, the d-axis corrected current command $i_d{}^{**}$ is input to the table 122, and the corresponding mutual inductance value $M^{\wedge}$ is output therefrom. The mutual inductance value $M^{\wedge}$ is input to a low-pass filter 123, and $M^{\wedge\wedge}$, which is a primary delay signal thereof, is output therefrom. A setting unit 124 outputs the mutual inductance value $M_0$ of the induction motor, which is a reference when measured at a base frequency. The mutual inductance values $M^{\wedge\wedge}$ and $M_0$ are input to a division unit 125, and the magnetic flux saturation coefficient G is output therefrom by computation shown in (Equation 3) described above.

Note that the table 122 is created in advance by changing the excitation current and measuring the mutual inductance of the induction motor. Further, the table 122 of Fig. 11 illustrates a relationship between the excitation current and the mutual inductance $M^{\wedge}$. However, a table illustrating a relationship between the excitation current and the magnetic flux saturation coefficient G may be obtained by computing the magnetic flux saturation coefficient G from the mutual inductance by (Equation 3). Further, instead of referring to the table, the magnetic flux saturation coefficient G may be computed by an approximate mathematical expression according to the excitation current.

The absolute value $|i_q{}^{*}|$ of the q-axis current command $i_q{}^{*}$ and the magnetic flux saturation coefficient G are input to the multiplication unit 126, and the q-axis corrected current command $i_q{}^{*\prime}$ is output therefrom according to (Equation 25).

[Equation 25]

$$i_q{}^{*\prime} = \left| i_q{}^{*} \right| \cdot G \qquad \cdots (25)$$

The q-axis corrected current command $i_q{}^{*\prime}$ and the d-axis corrected current command $i_d{}^{**}$ are input to a subtraction unit 127, and a current deviation $\Delta i^{*}$ is output therefrom. The current deviation $\Delta i^{*}$ is input to a proportional computation unit 128 having a constant of the proportional gain $K_{p3}$ and an integral computation unit 129 having a constant of the integral gain $K_{i3}$, and output signals thereof are output to the addition unit 1291. As a result, a current command correction value $\Delta i_d{}^{*}$ is output according to (Equation 26).

[Equation 26]

$$\Delta i_d^{\ *} = (K_{p3} + \frac{K_{i3}}{s}) \cdot \Delta i^* \qquad \cdots (26)$$

In an addition unit 1292, the d-axis current command $i_d^*$ and the current command correction value $\Delta I_d^*$ are added according to (Equation 27), and the d-axis corrected current command $I_d^{**}$ is output therefrom.
[Equation 27]

$$i_d^{\ **} = i_d^{\ *} + \Delta i_d^{\ *} \qquad \cdots (27)$$

A frequency estimation computation unit 13 of Fig. 10 outputs the estimated frequency $\omega_r^{\wedge}$ and the output frequency $\omega_1^*$ of the induction motor 1 according to (Equation 28).
[Equation 28]

$$\omega_r^{\ \wedge} = \frac{1}{1 + T_{obs}S} \cdot \left( \frac{V_{qc}^{**} - \omega_1^* L\sigma \frac{1}{1 + T_{acr}S} id^* - (R\ i_{qc} + L\sigma S)\ i_{qc}}{\frac{M}{L2}\phi 2d} \right)$$

$$\omega_1^{\ *} = \omega_r^{\ \wedge} + \frac{1}{T_2} \frac{i_q^{\ *}}{i_d^{\ **}}$$

$$\cdots (28)$$

Here, R*: added value of primary resistance value and secondary resistance converted to primary side, $T_{obs}$: observer time constant, and $T_2$: secondary time constant value.
Even in the present embodiment in which speed control, current control, and vector control are computed instead of V/f control, a highly efficient operation can be realized by controlling the d-axis corrected current command $I_d^{**}$ so as to follow the q-axis corrected current command $i_q^{*'}$.
Note that even though the estimated frequency $\omega_r^{\wedge}$ is computed in the present embodiment, an encoder may be attached to the induction motor 1 to detect the speed.
According to the present embodiment, by performing a control operation so that the q-axis corrected current command $i_q^{*'}$ obtained by multiplying the absolute value $|i_q^*|$ of the q-axis current command $i_q^*$ by the magnetic flux saturation coefficient G that changes according to the excitation current and the d-axis corrected current command $i_d^{**}$ follow, it is possible to realize a highly efficient current property with a smaller current value.
In the third embodiment, the voltage correction values $\Delta V_{dc}$ and $\Delta V_{qc}$ are created from the current commands $i_d^{**}$ and $i_q^*$ and the current detection values $i_{dc}$ and $i_{qc}$ (Equation 23), and computation shown in (Equation 24) of adding this voltage correction value and the voltage command of the vector control is performed. However, intermediate current commands $i_d^{***}$ and $i_q^{**}$ shown in (Equation 29) used for vector control computation may be created from the current commands $i_d^{**}$ and $i_q^*$ and the current detection values $i_{dc}$ and $i_{qc}$, and vector control computation shown in (Equation 30) may be performed using the output frequency $\omega_1^*$ and the electric circuit constants of the induction motor 1.
[Equation 29]

**11**

$$\begin{bmatrix} \mathrm{id}^{***} = (\mathrm{K}_{pd1} + \dfrac{\mathrm{K}_{id1}}{s})(\mathrm{i_d}^{**} - \mathrm{i}_{dc}) \\[4mm] \mathrm{iq}^{**} = (\mathrm{K}_{pq1} + \dfrac{\mathrm{K}_{iq1}}{s})(\mathrm{i_q}^{*} - \mathrm{i}_{qc}) \end{bmatrix} \qquad \cdots (29)$$

[Equation 30]

$$\begin{bmatrix} \mathrm{v}_{dc}^{***} = \mathrm{R}_1 \cdot \mathrm{id}^{***} - \omega_i^{*} \cdot \mathrm{L}_\sigma \cdot \dfrac{1}{1+\mathrm{T}_d s}\mathrm{iq}^{**} \\[4mm] \mathrm{v}_{qc}^{***} = \mathrm{R}_1 \cdot \mathrm{iq}^{**} + \omega_i^{*} \cdot \mathrm{L}_\sigma \cdot \dfrac{1}{1+\mathrm{T}_q s}\mathrm{id}^{***} + \omega_1^{*} \cdot \dfrac{\mathrm{M}}{\mathrm{L}_2} \cdot \phi_{2d}^{*} \end{bmatrix} \qquad \cdots (30)$$

Here, $K_{pd1}$: proportional gain of d-axis current control, $K_{id1}$: integral gain of d-axis current control, $K_{pq1}$: proportional gain of q-axis current control, $K_{iq1}$: integral gain of q-axis current control, $T_d$: d-axis electrical time constant $(L_\sigma/R)$, $T_q$: q-axis electrical time constant $(L_\sigma/R)$.

Alternatively, a voltage correction value $\Delta V_{d\_p}''$ of a d-axis proportional computation component, a voltage correction value $\Delta V_{d\_i}^{*}$ of a d-axis integral computation component, a voltage correction value $\Delta V_{q\_p}^{*}$ of a q-axis proportional computation component, and a voltage correction value $\Delta V_{q\_i}^{*}$ of a q-axis integral computation component used for vector control computation may be computed by (Equation 31) from the current commands $i_d^{**}$ and $i_q^{*}$ and the current detection values $i_{dc}$ and $i_{qc}$, and vector control computation shown in (Equation 32) may be performed using the output frequency $\omega_1^{*}$ and the electric circuit constants of the induction motor 1.

[Equation 31]

$$\begin{bmatrix} \Delta \mathrm{v}_{d\_p}^{*} = \mathrm{K}_{pd2}(\mathrm{i_d}^{**} - \mathrm{i}_{dc}) \\[4mm] \Delta \mathrm{v}_{d\_i}^{*} = \dfrac{\mathrm{K}_{id2}}{s}(\mathrm{i_d}^{**} - \mathrm{i}_{dc}) \\[4mm] \Delta \mathrm{v}_{q\_p}^{*} = \mathrm{K}_{pq2}(\mathrm{i_q}^{*} - \mathrm{i}_{qc}) \\[4mm] \Delta \mathrm{v}_{q\_i}^{*} = \dfrac{\mathrm{K}_{iq2}}{s}(\mathrm{i_q}^{*} - \mathrm{i}_{qc}) \end{bmatrix} \qquad \cdots (31)$$

Here, $K_{pd2}$: proportional gain of d-axis current control, $K_{id2}$: integral gain of d-axis current control, $K_{pq2}$: proportional gain of q-axis current control, $K_{iq2}$: integral gain of q-axis current control.

[Equation 32]

$$\left[\begin{array}{l} v_{dc}^{****} = (\Delta v_{d\_p}^{*} + \Delta v_{d\_i}^{*}) - \omega 1^{*} \cdot \dfrac{L_{\sigma}}{R_{1}} \cdot \Delta v_{q\_i}^{*} \\[3mm] v_{qc}^{****} = (\Delta v_{q\_p}^{*} + \Delta v_{q\_i}^{*}) + \omega 1^{*} \cdot \dfrac{L_{\sigma}}{R_{1}} \cdot \Delta v_{d\_i}^{*} + \omega 1^{*} \cdot \dfrac{M}{L2} \cdot \phi 2d^{*} \end{array}\right]$$

$$\cdots(3\,2)$$

Further, an output frequency command $\omega_1^{**}$ shown in (Equation 33) and vector control computation shown in (Equation 34) may be performed using the d-axis current command $i_d^{**}$, the primary delay signal $i_{qctd}$ of the q-axis current detection value $i_{qc}$, the frequency command $\omega_r^{*}$, and the electric circuit constants of the induction motor 1.

[Equation 33]

$$\omega_1^{**} = \omega_r^{*} + \frac{1}{T_2 \cdot i_d^{**}} \cdot i_{qc} \qquad \cdots(3\,3)$$

[Equation 34]

$$\left[\begin{array}{l} Vdc^{****} = R1 \cdot id^{**} - \omega1^{**} \cdot L_{\sigma} \cdot iqctd \\[3mm] V_{qc}^{****} = R1 \cdot iqctd + \omega1^{**} \cdot L_{\sigma} \cdot id^{*} + \omega1^{**} \cdot \dfrac{M}{L2} \cdot \phi2d^{*} \end{array}\right] \qquad \cdots(3\,4)$$

Here, $i_{qctd}$ is a signal obtained by passing $i_{qc}$ through a primary delay filter.

In the third embodiment so far, the frequency estimation computation unit 13 computes a speed estimated value $\omega_r{}^{\wedge}$ according to (Equation 28). However, it is possible to use a method in which current control and speed estimation are used together in q-axis current control. A speed estimated value $\omega_r{}^{\wedge\wedge}$ is computed as shown in (Equation 35).

[Equation 35]

$$\omega r^{\wedge\wedge} = \left(K_{pq3} + \frac{K_{iq3}}{s}\right)\left(i_q^{*} - i_{qc}\right) \qquad \cdots(3\,5)$$

Here, $K_{pq3}$ is proportional gain of current control, and $K_{iq3}$ is integral gain of current control.

Further, in the feedback control computation unit 11 in the third embodiment, the speed estimated values $\omega_r{}^{\wedge}$ and $\omega_r{}^{\wedge\wedge}$ are computed according to (Equation 28) or (Equation 35). However, it is possible to use a method of attaching an encoder to the induction motor 1 and computing a speed detected value from an encoder signal.

Fourth embodiment

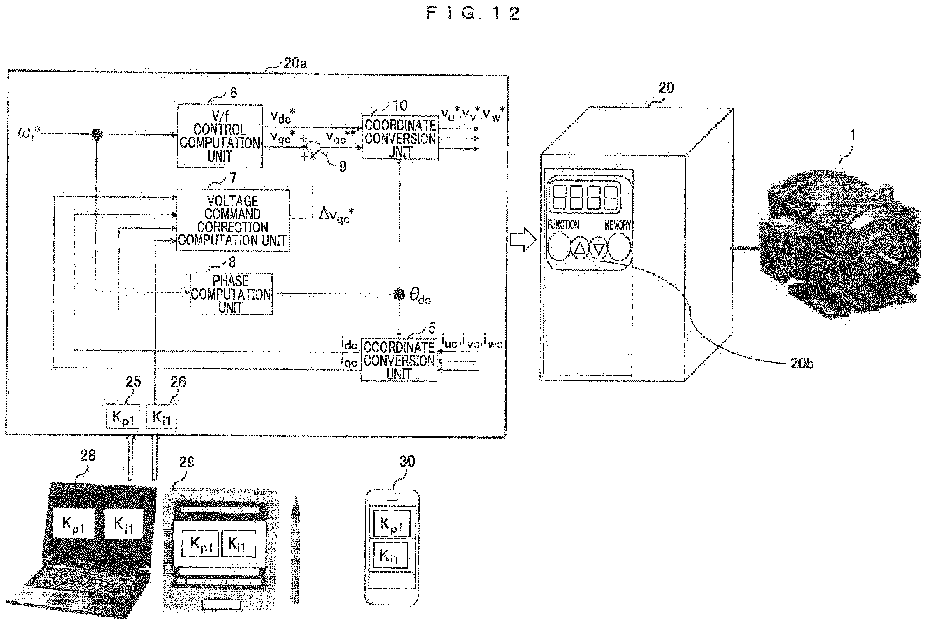

Fig. 12 is a configuration diagram of a power conversion device according to a fourth embodiment.

The present embodiment is an application of the present embodiment to an induction motor drive system. In the figure, reference symbols 1, 5 to 10 of components are the same as those of Fig. 1.

The induction motor 1 is driven by the power conversion device 20. In the power conversion device 20, the components of reference symbols 5 to 10 of Fig. 1 are implemented as software 20a, and the components of reference symbols 2, 3 and 4 of Fig. 1 are implemented as hardware. Further, the predetermined proportional gain $K_{p1}25$ and the predetermined integral gain $K_{i1}26$ of the software 20a can be set or changed by a higher-level device such as a digital operator 20b, a personal computer 28, a tablet PC 29, or a smartphone 30.

When the present embodiment is applied to the induction motor drive system, highly efficient operation can be realized in V/f control or speed sensorless vector control. Further, the predetermined proportional gain $K_{p1}$25 and the predetermined integral gain $K_{i1}$26 may be set on a fieldbus of a programmable logic controller, a local area network connected to a computer, or a control device.

Further, even though the present embodiment is disclosed using the first embodiment, the second or third embodiment may be used.

Note that in the first to fourth embodiments, as a switching element included in the power converter 2, it is possible to use a Si (silicon) semiconductor element, or a wide bandgap semiconductor element such as SiC (Silicon Carbide) or GaN (Gallium Nitride).

REFERENCE SIGNS LIST

| | |
|---|---|
| 1 | Induction motor |
| 2 | Power converter |
| 3 | DC power supply |
| 4 | Current detector |
| 5 | Coordinate conversion unit |
| 6 | V/f control computation unit |
| 7, 7a, 7b | Voltage command correction computation unit |
| 8 | Phase computation unit |
| 9 | Addition unit |
| 10 | Coordinate conversion unit |
| 11 | Feedback control computation unit |
| 12 | Excitation current command correction computation unit |
| 13 | Frequency estimation computation unit |
| 20 | Power conversion device |
| 20a | Software part of power conversion device |
| 20b | Digital operator of power conversion device |
| 21 | Current detector |
| 22 | Encoder |
| 23 | Calculation unit of vector current component |
| 24 | Computation unit of magnetic flux saturation coefficient |
| 25 | Predetermined proportional gain |
| 26 | Predetermined integral gain |
| 28 | Personal computer |
| 29 | Tablet PC |
| 20 | Smartphone |
| 72 | Table |
| 73 | Low-pass filter (LPF) |
| 74 | Setting unit |
| 75 | Division unit |
| 76 | Multiplication unit |
| 77 | Subtraction unit |
| 78 | Proportional computation unit |
| 79 | Integral computation unit |
| G | Magnetic flux saturation coefficient |
| $i_q{}^*$, | $i_d{}^{**}$ d-axis current command |
| $i_q{}^*$ | q-axis current command |
| $\omega_r{}^*$ | Frequency command |
| $\omega_1{}^*$ | Output frequency |
| $\omega_r$ | Speed of induction motor |
| $\omega_r{}^\wedge$ | Speed estimated value |
| $\omega_s{}^*$ | Sliding frequency command |
| $V_{dc}{}^*, V_{dc}{}^{**}, V_{dc}{}^{***}, V_{dc}{}^{****}$ | d-axis voltage command |
| $V_{qc}{}^*, V_{qc}{}^{**}, V_{qc}{}^{***}, V_{qc}{}^{****}$ | q-axis voltage command |
| $\Delta V_{qc}{}^*$ | q-axis voltage command correction value |

**EP 4 075 665 B1**

$\Delta i_d{}^*$                      d-axis current command correction value

**Claims**

1. A power conversion device (20) for driving and controlling an induction motor (1), the power conversion device (20) comprising

   a voltage command correction computation unit (7) for computing a voltage command correction value ($\Delta$Vqc*) for correcting a torque axis voltage command (Vqc*) based on a torque axis current detection value (iqc) and a magnetic flux axis current detection value (idc),
   a coordinate conversion unit (5) configured to output the magnetic flux axis current detection value (idc) and the torque axis current detection value (iqc) from a phase computation ($\theta$dc) value and the detection values (iuc, ivc, iwc) of the three-phase alternating currents (iu, iv, iw),
   a phase computation unit (8) configured to integrate the frequency command and to output the phase computation value ($\theta$dc),
   the power conversion device **characterized in that**
   the voltage command correction computation unit computes the voltage command correction value ($\Delta$Vqc*) based on a deviation between the magnetic flux axis current detection value (idc) and a corrected torque current obtained by multiplying an absolute value of a torque axis current detection value (iqc) by a magnetic flux saturation coefficient (G) changing according to an excitation current.

2. A power conversion device (20) for driving and controlling an induction motor (1) according to claim 1, wherein the voltage command correction computation unit computes the voltage command correction value ($\Delta$Vqc*) based on a deviation between corrected active power obtained by multiplying an absolute value of active power obtained by multiplying the torque axis voltage command (Vqc*) by the torque axis current detection value (iqc) by a magnetic flux saturation coefficient (G) changing according to an excitation current and reactive power obtained by multiplying the torque axis voltage command (Vqc*) by the magnetic flux axis current detection value (idc).

3. The power conversion device (20) according to claim 1, further comprising

   a V/f control computation unit (6) for computing a torque axis voltage command (Vqc*) by multiplying a ratio (V/f ratio) of an output voltage to an output frequency of the induction motor (1) by the output frequency, and setting a magnetic flux axis voltage command to zero,
   wherein the torque axis voltage command (Vqc*) is corrected by the voltage command correction value ($\Delta$Vqc*).

4. The power conversion device (20) according to claim 2, further comprising

   a V/f control computation unit (6) for computing a torque axis voltage command (Vqc*) by multiplying a ratio (V/f ratio) of an output voltage to an output frequency of the induction motor (1) by the output frequency, and setting a magnetic flux axis voltage command to zero,
   wherein the torque axis voltage command (Vqc*) is corrected by the voltage command correction value ($\Delta$Vqc*).

5. The power conversion device (20) according to claim 1 or 2, wherein the magnetic flux saturation coefficient (G) is a ratio of a plurality of mutual inductance values of the induction motor (1) measured by changing an excitation current to a mutual inductance value of the induction motor (1) measured by a normal excitation current.

6. The power conversion device (20) according to claim 4, wherein the magnetic flux saturation coefficient (G) is obtained by referring to a table (72, 122) according to an excitation current or by computation using an approximate mathematical expression according to an excitation current.

7. The power conversion device (20) according to claim 3, wherein the torque axis voltage command (Vqc*) is computed by proportional control and integral control so that a deviation between the corrected torque current and the magnetic flux axis current detection value (idc) is set to zero.

8. The power conversion device (20) according to claim 4, wherein the torque axis voltage command (Vqc*) is computed by proportional control and integral control so that a deviation between an absolute value of the corrected active power and an absolute value of the reactive power is set to zero.

9. The power conversion device (20) according to claim 7 or 8, wherein control gains of the proportional control and the integral control are automatically corrected based on an output frequency of the induction motor (1).

10. A power conversion device (20) according to claim 1 for computing magnetic flux axis and torque axis voltage commands (Vqc*) using an excitation current command and a torque current command of an induction motor, magnetic flux axis and torque axis current detection values (iqc), and a speed detected value or a speed estimated value, the power conversion device (20) comprising

an excitation current command correction computation unit (12) for computing a corrected excitation current command based on the excitation current command and the torque current command,
wherein the excitation current command correction computation unit (12) corrects the excitation current command so that the corrected excitation current command follows a corrected torque current command obtained by multiplying an absolute value of the torque current command by a magnetic flux saturation coefficient (G) changing according to an excitation current.

11. The power conversion device (20) according to claim 10, wherein the corrected excitation current command is computed by proportional control and integral control so that a deviation between the corrected torque current command and the corrected excitation current command is set to zero.

12. The power conversion device (20) according to claim 11, wherein control gains of the proportional control and the integral control are automatically corrected based on an output frequency of the induction motor (1).

13. The power conversion device (20) according to claim 10, wherein the magnetic flux saturation coefficient (G) is a ratio of a plurality of mutual inductance values of the induction motor (1) measured by changing an excitation current to a mutual inductance value of the induction motor measured by a normal excitation current.

14. The power conversion device (20) according to claim 13, wherein the magnetic flux saturation coefficient (G) is obtained by referring to a table according to an excitation current or by computation using an approximate mathematical expression according to an excitation current.

15. The power conversion device (20) according to claim 7, 8, or 11, wherein a control response frequency or control gain set for the proportional control or the integral control is allowed to be set or changed by connecting to a higher-level device such as a digital operator (20b), a personal computer (28), a tablet PC (29), or a smartphone device (30).

**Patentansprüche**

1. Leistungsumsetzungsvorrichtung (20) zum Ansteuern und Steuern eines Induktionsmotors (1), wobei die Leistungsumsetzungsvorrichtung (20) Folgendes umfasst:

eine Spannungsbefehlskorrektur-Berechnungseinheit (7) zum Berechnen eines Spannungsbefehls-Korrekturwertes (ΔVqc*) zum Korrigieren eines Drehmomentachsen-Spannungsbefehls (Vqc*) auf der Grundlage eines Drehmomentachsen-Stromdetektionswertes (iqc) und eines Magnetflussachsen-Stromdetektionswertes (idc),
eine Koordinatenumsetzungseinheit (5), die konfiguriert ist, den Magnetflussachsen-Stromdetektionswert (idc) und den Drehmomentachsen-Stromdetektionswert (iqc) aus einem Phasenberechnungswert (θdc) und den Detektionswerten (iuc, ivc, iwc) der Dreiphasenwechselströme (iu, iv, iw) auszugeben,
eine Phasenberechnungseinheit (8), die konfiguriert ist, den Frequenzbefehl zu integrieren und den Phasenberechnungswert (θdc) auszugeben,
wobei die Leistungsumsetzungsvorrichtung **dadurch gekennzeichnet ist, dass**
die Spannungsbefehlskorrektur-Berechnungseinheit den Spannungsbefehls-Korrekturwert (ΔVqc*) auf der Grundlage einer Abweichung zwischen dem Magnetflussachsen-Stromdetektionswert (idc) und einem korrigierten Drehmomentstrom, der durch Multiplizieren eines Absolutwertes eines Drehmomentachsen-Stromdetektionswertes (iqc) mit einem Magnetfluss-Sättigungskoeffizienten (G), der sich gemäß einem Erregungsstrom ändert, erhalten wird, berechnet.

2. Leistungsumsetzungsvorrichtung (20) zum Ansteuern und Steuern eines Induktionsmotors (1) nach Anspruch 1, wobei die Spannungsbefehlskorrektur-Berechnungseinheit den Spannungsbefehls-Korrekturwert (ΔVqc*) auf der Grundlage einer Abweichung zwischen einer korrigierten Wirkleistung, die durch Multiplizieren eines Absolutwertes der Wirkleistung, der durch Multiplizieren des Drehmomentachsen-Spannungsbefehls (Vqc*) mit dem Drehmomentachsen-Stromdetektionswert (iqc) erhalten wird, mit einem Magnetfluss-Sättigungskoeffizienten (G), der sich gemäß einer Erregungsspannung ändert, erhalten wird, und einer Blindleistung, die durch Multiplizieren des Drehmomentachsen-Spannungsbefehls (Vqc*) mit dem Magnetflussachsen-Stromdetektionswert (idc) erhalten wird, berechnet.

3. Leistungsumsetzungsvorrichtung (20) nach Anspruch 1, die ferner Folgendes umfasst:

eine V/f-Steuerungsberechnungseinheit (6) zum Berechnen eines Drehmomentachsen-Spannungsbefehls (Vqc*) durch Multiplizieren eines Verhältnisses (V/f-Verhältnisses) einer Ausgangsspannung zu einer Ausgangsfrequenz des Induktionsmotors (1) mit der Ausgangsfrequenz und Einstellen eines Magnetflussachsen-Spannungsbefehls auf null,
wobei der Drehmomentachsen-Spannungsbefehl (Vqc*) durch den Spannungsbefehls-Korrekturwert (ΔVqc*) korrigiert wird.

4. Leistungsumsetzungsvorrichtung (20) nach Anspruch 2, die ferner Folgendes umfasst:

eine V/f-Steuerungsberechnungseinheit (6) zum Berechnen eines Drehmomentachsen-Spannungsbefehls (Vqc*) durch Multiplizieren eines Verhältnisses (V/f-Verhältnisses) einer Ausgangsspannung zu einer Ausgangsfrequenz des Induktionsmotors (1) mit der Ausgangsfrequenz und Einstellen eines Magnetflussachsen-Spannungsbefehls auf null,
wobei der Drehmomentachsen-Spannungsbefehl (Vqc*) durch den Spannungsbefehls-Korrekturwert (ΔVqc*) korrigiert wird.

5. Leistungsumsetzungsvorrichtung (20) nach Anspruch 1 oder 2, wobei der Magnetfluss-Sättigungskoeffizient (G) ein Verhältnis mehrerer Gegeninduktionswerte des Induktionsmotors (1), die durch Ändern eines Erregungsstroms gemessen werden, zu einem Gegeninduktionswert des Induktionsmotors (1), der durch einen regulären Erregungsstrom gemessen wird, ist.

6. Leistungsumsetzungsvorrichtung (20) nach Anspruch 4, wobei der Magnetfluss-Sättigungskoeffizient (G) durch Bezugnahme auf eine Tabelle (72, 122) gemäß einem Erregungsstrom oder durch Berechnung unter Verwendung eines mathematischen Näherungsausdrucks gemäß einem Erregungsstrom erhalten wird.

7. Leistungsumsetzungsvorrichtung (20) nach Anspruch 3, wobei der Drehmomentachsen-Spannungsbefehl (Vqc*) durch Proportional- und Integralsteuerung berechnet wird, derart, dass eine Abweichung zwischen dem korrigierten Drehmomentstrom und dem Magnetflussachsen-Stromdetektionswert (idc) auf null eingestellt wird.

8. Leistungsumsetzungsvorrichtung (20) nach Anspruch 4, wobei der Drehmomentachsen-Spannungsbefehl (Vqc*) durch Proportional- und Integralsteuerung berechnet wird, derart, dass eine Abweichung zwischen einem Absolutwert der korrigierten Wirkleistung und einem Absolutwert der Blindleistung auf null eingestellt wird.

9. Leistungsumsetzungsvorrichtung (20) nach Anspruch 7 oder 8, wobei die Steuerungsverstärkungen der Proportional- und Integralsteuerung auf der Grundlage einer Ausgangsfrequenz des Induktionsmotors (1) automatisch korrigiert werden.

10. Leistungsumsetzungsvorrichtung (20) nach Anspruch 1 zum Berechnen eines Magnetflussachsen-Spannungsbefehls und eines Drehmomentachsen-Spannungsbefehls (Vqc*) unter Verwendung eines Erregungsstrombefehls und eines Drehmomentstrombefehls eines Induktionsmotors, eines Magnetflussachsen-Stromdetektionswertes und eines Drehmomentachsen-Stromdetektionswertes (iqc) und eines Drehzahldetektionswertes oder eines Drehzahlschätzwertes, wobei die Leistungsumsetzungsvorrichtung (20) Folgendes umfasst:

eine Erregungsstrombefehlskorrektur-Berechnungseinheit (12) zum Berechnen eines korrigierten Erregungsstrombefehls auf der Grundlage des Erregungsstrombefehls und des Drehmomentstrombefehls,
wobei die Erregungsstrombefehlskorrektur-Berechnungseinheit (12) den Erregungsstrombefehl korrigiert, derart, dass der korrigierte Erregungsstrombefehl einem korrigierten Drehmomentstrombefehl folgt, der durch Multiplizieren eines Absolutwertes des Drehmomentstrombefehls mit einem Magnetfluss-Sättigungskoeffizienten (G), der sich gemäß einem Erregungsstrom ändert, erhalten wird.

11. Leistungsumsetzungsvorrichtung (20) nach Anspruch 10, wobei der korrigierte Erregungsstrombefehl durch Proportional- und Integralsteuerung berechnet wird, derart, dass eine Abweichung zwischen dem korrigierten Drehmomentstrombefehl und dem korrigierten Erregungsstrombefehl auf null eingestellt wird.

12. Leistungsumsetzungsvorrichtung (20) nach Anspruch 11, wobei die Steuerungsverstärkungen der Proportional- und Integralsteuerung auf der Grundlage einer Ausgangsfrequenz des Induktionsmotors (1) automatisch korrigiert werden.

13. Leistungsumsetzungsvorrichtung (20) nach Anspruch 10, wobei der Magnetfluss-Sättigungskoeffizient (G) ein Verhältnis mehrerer Gegeninduktionswerte des Induktionsmotors (1), die durch Ändern eines Erregungsstroms gemessen werden, zu einem Gegeninduktionswert des Induktionsmotors, der durch einen regulären Erregungsstrom gemessen wird, ist.

14. Leistungsumsetzungsvorrichtung (20) nach Anspruch 13, wobei der Magnetfluss-Sättigungskoeffizient (G) durch Bezugnahme auf eine Tabelle gemäß einem Erregungsstrom oder durch Berechnung unter Verwendung eines mathematischen Näherungsausdrucks gemäß einem Erregungsstrom erhalten wird.

15. Leistungsumsetzungsvorrichtung (20) nach Anspruch 7, 8 oder 11, wobei zugelassen ist, dass eine Steuerungsantwortfrequenz oder eine Steuerungsverstärkung, die für die Proportionalsteuerung oder die Integralsteuerung eingestellt werden, durch Verbinden mit einer Vorrichtung einer höheren Ebene wie etwa einer digitalen Betätigungseinrichtung (20b), einem Personal-Computer (28), einem Tablet-PC (29) oder einer Smartphone-Vorrichtung (30) eingestellt oder geändert werden.

## Revendications

1. Dispositif de conversion de puissance (20) destiné à entraîner et à commander un moteur à induction (1), le dispositif de conversion de puissance (20) comprenant

   une unité de calcul de correction d'ordre de tension (7) destinée à calculer une valeur de correction d'ordre de tension ($\Delta Vqc^*$) pour corriger un ordre de tension d'axe de couple ($Vqc^*$) sur la base d'une valeur de détection de courant d'axe de couple (iqc) et d'une valeur de détection de courant d'axe de flux magnétique (idc),
   une unité de conversion de coordonnées (5) configurée pour sortir la valeur de détection de courant de flux magnétique (idc) et la valeur de détection de courant d'axe de couple (iqc) à partir d'une valeur de calcul de phase ($\theta dc$) et des valeurs de détection (iuc, ivc, iwc) des courants alternatifs triphasés (iu, iv, iw),
   une unité de calcul de phase (8) configurée pour intégrer l'ordre de fréquence et pour sortir la valeur de calcul de phase ($\theta dc$),
   le dispositif de conversion de puissance étant **caractérisé en ce que**
   l'unité de calcul de correction d'ordre de tension calcule la valeur de correction d'ordre de tension ($\Delta Vqc^*$) sur la base d'une déviation entre la valeur de détection de courant d'axe de flux magnétique (idc) et un courant de couple corrigé obtenu en multipliant une valeur absolue d'une valeur de détection de courant d'axe de couple (iqc) par un coefficient de saturation de flux magnétique (G) changeant en accord avec un courant d'excitation.

2. Dispositif de conversion de puissance (20) destiné à entraîner et à commander un moteur à induction (1) selon la revendication 1,
   dans lequel l'unité de calcul de correction d'ordre de tension calcule la valeur de correction d'ordre de tension ($\Delta Vqc^*$) sur la base d'une déviation entre une puissance active corrigée obtenue en multipliant une valeur absolue d'une puissance active obtenue en multipliant l'ordre de tension d'axe de couple ($Vqc^*$) par la valeur de détection de courant d'axe de couple (iqc) par un coefficient de saturation de flux magnétique (G) changeant en accord avec un courant d'excitation et une puissance réactive obtenue en multipliant l'ordre de tension d'axe de couple ($Vqc^*$) par la valeur de détection de courant d'axe de flux magnétique (idc).

3. Dispositif de conversion de puissance (20) selon la revendication 1, comprenant en outre

   une unité de calcul de commande V/f (6) destinée à calculer un ordre de tension d'axe de couple ($Vqc^*$) en multipliant un rapport (rapport V/f) d'une tension de sortie sur une fréquence de sortie du moteur à induction (1) par la fréquence de sortie, et à fixer un ordre de tension d'axe de flux magnétique à zéro,
   dans lequel l'ordre de tension d'axe de couple ($Vqc^*$) est corrigé par la valeur de correction d'ordre de tension ($\Delta Vqc^*$).

**4.** Dispositif de conversion de puissance (20) selon la revendication 2, comprenant en outre

une unité de calcul de commande V/f (6) destinée à calculer un ordre de tension d'axe de couple (Vqc*) en multipliant un rapport (rapport V/f) d'une tension de sortie sur une fréquence de sortie du moteur à induction (1) par la fréquence de sortie, et à fixer un ordre de tension d'axe de flux magnétique à zéro, dans lequel l'ordre de tension d'axe de couple (Vqc*) est corrigé par la valeur de correction d'ordre de tension (ΔVqc*).

**5.** Dispositif de conversion de puissance (20) selon la revendication 1 ou 2, dans lequel le coefficient de saturation de flux magnétique (G) est un rapport d'une pluralité de valeurs d'inductance mutuelle du moteur à induction (1) mesurées en changeant un courant d'excitation sur une valeur d'inductance mutuelle du moteur à induction (1) mesurée par un courant d'excitation normal.

**6.** Dispositif de conversion de puissance (20) selon la revendication 4, dans lequel le coefficient de saturation de flux magnétique (G) est obtenu en se référant à une table (72, 122) en accord avec un courant d'excitation ou via un calcul utilisant une expression mathématique approximative en accord avec un courant d'excitation.

**7.** Dispositif de conversion de puissance (20) selon la revendication 3, dans lequel l'ordre de tension d'axe de couple (Vqc*) est calculé via une commande proportionnelle et une commande intégrale de telle sorte qu'une déviation entre le courant de couple corrigé et la valeur de détection de courant d'axe de flux magnétique (idc) est fixée à zéro.

**8.** Dispositif de conversion de puissance (20) selon la revendication 4, dans lequel l'ordre de tension d'axe de couple (Vqc*) est calculé via une commande proportionnelle et une commande intégrale de telle sorte qu'une déviation entre une valeur absolue de la puissance active corrigée et une valeur absolue de la puissance réactive est fixée à zéro.

**9.** Dispositif de conversion de puissance (20) selon la revendication 7 ou 8, dans lequel des gains de commande de la commande proportionnelle et de la commande intégrale sont corrigés automatiquement sur la base d'une fréquence de sortie du moteur à induction (1).

**10.** Dispositif de conversion de puissance (20) selon la revendication 1 destiné à calculer des ordres de tension d'axe de flux magnétique et d'axe couple (Vqc*) en utilisant un ordre de courant d'excitation et un ordre de courant de couple d'un moteur à induction, des valeurs de détection de courant d'axe de flux magnétique et d'axe de couple (iqc), et une valeur détectée de vitesse ou une valeur estimée de vitesse, le dispositif de conversion de puissance (20) comprenant

une unité de calcul de correction d'ordre de courant d'excitation (12) destinée à calculer un ordre de courant d'excitation corrigé sur la base de l'ordre de courant d'excitation et de l'ordre de courant de couple, dans lequel l'unité de calcul de correction d'ordre de courant d'excitation (12) corrige l'ordre de courant d'excitation de telle sorte que l'ordre de courant d'excitation corrigé suit un ordre de courant de couple corrigé obtenu en multipliant une valeur absolue de l'ordre de courant de couple par un coefficient de saturation de flux magnétique (G) changeant en accord avec un courant d'excitation.

**11.** Dispositif de conversion de puissance (20) selon la revendication 10, dans lequel l'ordre de courant d'excitation corrigé est calculé via une commande proportionnelle et une commande intégrale de telle sorte qu'une déviation entre l'ordre de courant de couple corrigé et l'ordre de courant d'excitation corrigé est fixée à zéro.

**12.** Dispositif de conversion de puissance (20) selon la revendication 11, dans lequel des gains de commande de la commande proportionnelle et de la commande intégrale sont corrigés automatiquement sur la base d'une fréquence de sortie du moteur à induction (1).

**13.** Dispositif de conversion de puissance (20) selon la revendication 10, dans lequel le coefficient de saturation de flux magnétique (G) est un rapport d'une pluralité de valeurs d'inductance mutuelle du moteur à induction (1) mesurées en changeant un courant d'excitation sur une valeur d'inductance mutuelle du moteur à induction mesurée par un courant d'excitation normal.

**14.** Dispositif de conversion de puissance (20) selon la revendication 13, dans lequel le coefficient de saturation de flux magnétique (G) est obtenu en se référant à une table en accord avec un courant d'excitation ou via un calcul utilisant une expression mathématique approximative en accord avec un courant d'excitation.

**15.** Dispositif de conversion de puissance (20) selon la revendication 7, 8 ou 11, dans lequel une fréquence de réponse de commande ou un gain de commande fixé(e) pour la commande proportionnelle ou la commande intégrale est autorisé(e) à être fixé(e) ou changé(e) via une connexion à un dispositif de niveau supérieur tel qu'un opérateur numérique (20b), un ordinateur personnel (28), une tablette PC (29) ou un dispositif de smartphone (30).

EP 4 075 665 B1

EP 4 075 665 B1

F I G. 3

F I G. 4

F I G. 5

EP 4 075 665 B1

FIG. 7

1

20

21 CURRENT DETECTOR

22 ENCODER

$\theta$

$i_u, i_v, i_w$

$i_{uc}, i_{vc}, i_{wc}$

FUNCTION

MEMORY

23 CALCULATION UNIT OF VECTOR CURRENT COMPONENT

$I_{dc}, i_{qc}$

24 COMPUTATION UNIT OF MAGNETIC FLUX SATURATION COEFFICIENT

EP 4 075 665 B1

F I G. 9

F I G . 1 0

F I G. 1 1

F I G. 1 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010220331 A
- US 2007018606 A1
- EP 3509211 A1